# EUROPÄISCHE PATENTANMELDUNG

(11) **EP 2 990 669 A1**
(43) Veröffentlichungstag der Anmeldung: **02.03.2016**
(21) Anmeldenummer: 15182632.8
(22) Anmeldetag: 27.08.2015
(51) Int. Cl.: F16C 29/06

(54) **LINEARKUGELLAGER FÜR RUNDE LAUFBAHNEN UND PROFILIERTE LAUFBAHNEN UND PROFILE**

(30) Priorität: 28.08.2014 DE 202014007037 U
(71) Anmelder: F. & G. Hachtel GmbH & Co. KG, 73431 Aalen (DE)
(72) Erfinder: GREINER, Heinz, 73061 Ebersbach (DE)
(74) Vertreter: Kohler Schmid Möbus Patentanwälte

(57) **Zusammenfassung**

Die Erfindung betrifft ein Linearkugellager für die Bewegung auf einer kreisrunden, elliptischen, oder anderen geschlossenen Profilen mit teilweise kugelabschnittsförmigen Bereichen und auf darauf mit Kugelbahnen versehenen Wellen, mit mehreren jeweils zwei Laufbahnen aufweisenden Lastbereichen, die im Querschnitt entlang einem Kreisbogen angeordnet sind, die aus einer ein- oder mehrteiligen Außenhülse (1) bestehen, in die die Laufbahnen tragenden Platten (3) mit jeweils mindestens einem Kugelführungselement, das Umlenkbahnen und Rücklaufbahnen enthält, eingebracht sind, wobei der Radius der jeweiligen Rücklaufbahn zum Wellenmittelpunkt kleiner ist als der Radius der Traglaufbahn zum Wellenmittelpunkt und die Umlenkbahnen räumlich so geneigt sind, dass alle Mittelpunkte der Umlenkbahnen oberhalb einer Ebene gebildet aus einem Rechteck zwischen Traglaufbahn und Rücklaufbahn liegen.

## Beschreibung

Die Erfindung bezieht sich auf Linearkugellager mit unbegrenztem Hubweg, deren Gegenlaufbahn durch kreisrunde, durch kreisrunde mit Kugelbahnen versehene oder durch elliptische mit teilweise kreisrunden Abschnitten oder elliptischen Wellen mit kreisrunden und profilierten Abschnitten gebildet wird und darauf sich translatorisch bewegenden Elementen, die mehrere Last tragende Platten mit jeweils zwei Laufbahnen aufweisen, die im Rücken konvex ausgeführt sind, die um eine Parallele zur Führungsachse so pendeln können, dass sich die Last gleichmäßig auf beide Laufbahnen verteilt.

Es sind aus dem Markt Linearkugellager bekannt (Thomson Super Smart, INA KS), die sich auf kreisrunden Wellen bewegen und die jeweils auf ihren tragenden Laufbahnplatten zwei Laufbahnen aufweisen und die um die Parallele zur Längsachse pendeln können. Auch sind diverse Anmeldungen bekannt, die auf kreisrunden und profilierten Wellen sich bewegende Linearkugellager zeigen. Die DE 42 10 039 und die EP 1 936 216 B1 stellen solche Ausführungen dar.

Während die aus dem Markt bekannten Linearkugellager nur für die Führung auf kreisrunden Wellen geeignet sind, zeigen die beiden Patente und andere Anmeldungen Linearkugellager, die sowohl auf runden als auch auf profilierten Wellen Verwendung finden können. Die Verwendung auf profilierten Wellen erlaubt eine signifikante Erhöhung der Tragfähigkeit und damit die Möglichkeit vorgespannte Führungen mit industriell nutzbarer Lebensdauer zu schaffen. Die in den Patenten dargestellten Lösungen erlauben dies nur eingeschränkt. So sind dort die Rückläufe oberhalb einer Parallelen zur Horizontalen durch den Mittelpunkt der Welle angeordnet, die Mittelpunkte der Rücklaufbahnen haben einen größeren Abstand zum Wellenmittelpunkt als die Lastlaufbahnen, um einen Einlauf in die Profilbahnen der Welle überhaupt zu ermöglichen. Dennoch wird das in den dargestellten Lösungen nur möglich, indem Kugeln gewählt werden, die deutlich kleiner sind als sie bei beim Gebrauch nur auf einer runden, nicht profilierten Welle sein könnten. Ein nicht unerheblicher Tragzahlverlust ist deshalb damit verbunden.

Die Größe der Tragzahl ist im Wesentlichen abhängig von der Größe des Winkels, der gebildet wird aus den Verbindungslinien der Lastpunkte zum Wellenmittelpunkt und vom Kugeldurchmesser, auch bei den in den Patenten gezeigten Anordnungen mit jeweils zwei Kugelbahnen auf der jeweiligen Tragplatte. Ein vergrößerter Winkel zwischen den Lastberührpunkten würde zwar die Einlaufsituation bei einer profilierten Welle erleichtern, die Tragzahl jedoch abhängig vom Cosinus des Winkels reduzieren.

Ziel der Erfindung ist deshalb, ein Linearkugellager zu schaffen, das sowohl auf runden als auch auf profilierten Wellen bewegt werden kann, und das jedoch größere Tragfähigkeiten erreichen kann als die in obigen Patenten beschriebenen Maschinenelemente.

Die Aufgabe ist bei einem Linearkugellager der eingangs beschriebenen Art gemäß der Erfindung durch die Merkmale des Anspruchs 1 gelöst. Das Linearkugellager kann somit auf runden als auch auf profilierten Wellen bewegt werden.

Gemäß einer Ausführungsform kann vorgesehen sein, dass die Umlenkbahnen um eine Linie gebildet aus dem Endpunkt der Geraden der Traglaufbahnen und der jeweiligen Rücklaufibahn nach außen in einem Winkel gedreht sind.

Weitere Vorteile ergeben sich, wenn Anstieg und Abstieg in der jeweiligen Umlenkbahn eine konstante Steigung aufweist.

Alternativ kann vorgesehen sein, dass der Anstieg und Abstieg in der jeweiligen Umlenkbahn eine variable Steigung aufweist.

Die Erfindung wird nachfolgend anhand der Zeichnungen beschrieben.

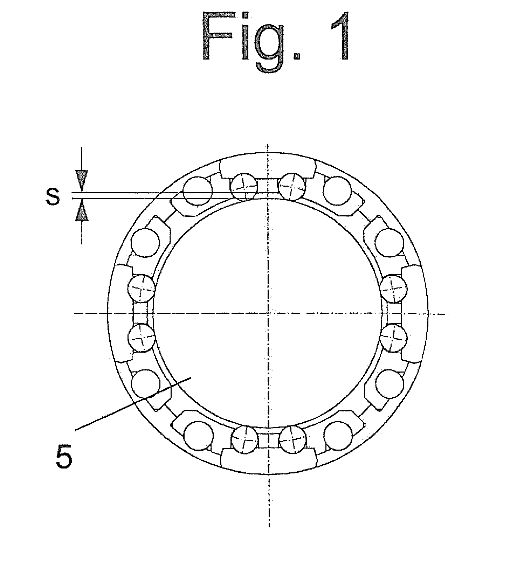

Fig. 1 zeigt Linearkugellager für runde Wellen bestehend aus einer geteilten Außenhülse 1, Tragplatten 3 mit jeweils zwei Laufbahnen, einem konvexen oder sphärisch konvexen Rückenbereich, der die Platte in einer oder zwei Ebenen so an einem äußeren Gehäuse abstützt, dass jede Lastreihe dieselbe Kraft aufnimmt und einen inneren Käfig 2, der die Umlaufbahnen aufweist, die Kugeln 4 hält, der durch Haltekonturen in der Außenhülse 1 fixiert und gehalten ist und dessen innerer Durchmesser mit der Welle 5 einen Spalt s bildet, der eine Druckellipse einer vergrößerten, profilierten Welle mit einer Schmiegung von wenigstens 52 % vollständig unterstützen kann bei einer Hertz'schen Pressung von 4.000 N/mm^2 .

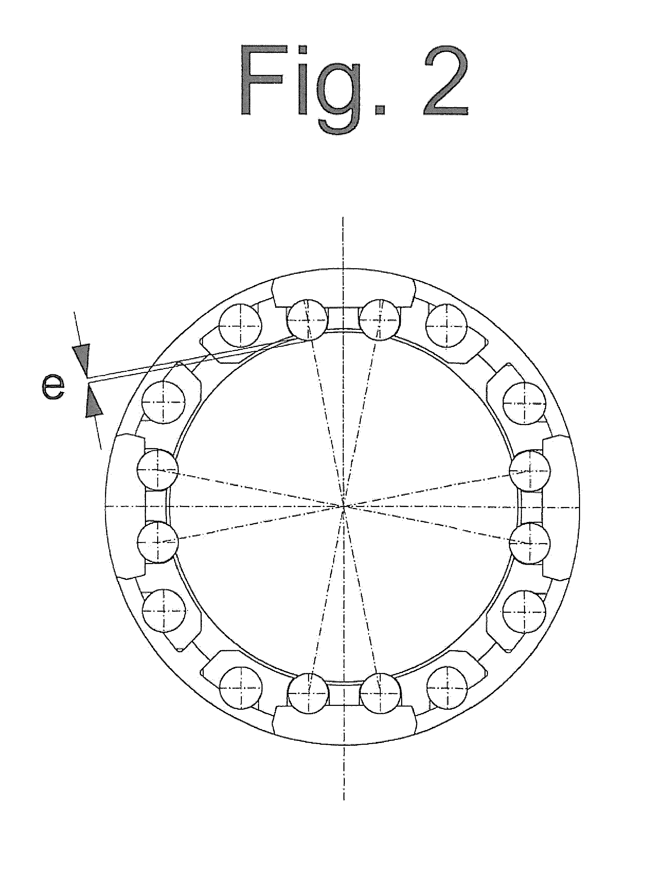

Fig. 2 zeigt die Bedingung für die Verwendung auf profilierten Wellen, die Beibehaltung der Lastwinkel, die profilierte Welle mit einem entsprechend genannter Bedingung größeren Durchmesser als die runde Welle. Die profilierte Kugelbahn weist in der Welle einen ungestört kreisförmigen Abschnitt über den gesamten Bereich auf, der die Druckellipse nach Hertz auch bei Spiel vollständig unterstützt. Maß e zeigt den räumlichen Bereich der vollständig unterstützten Druckellipse.

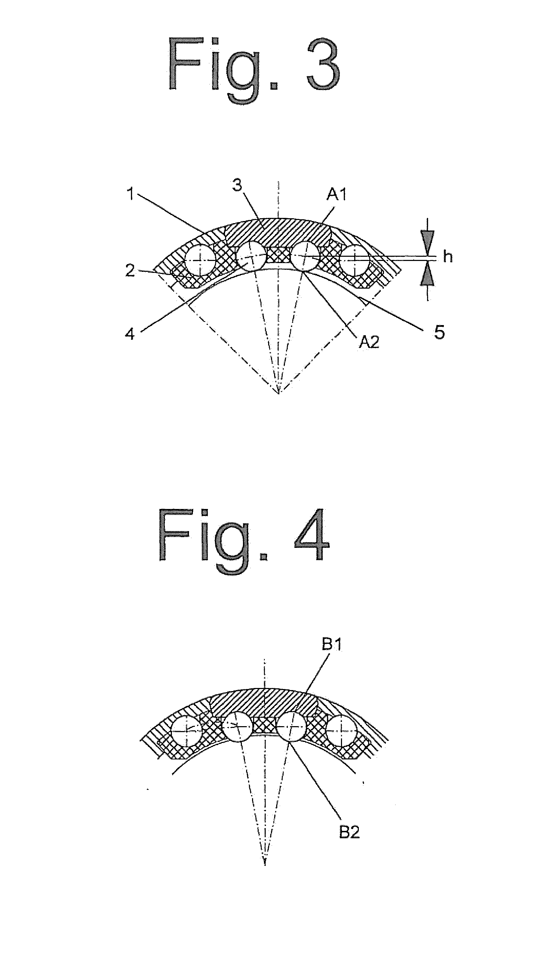

Fig. 3 zeigt einen Teilquerschnitt mit der Situation der Berührlinien auf der runden Welle, die Lage der Rücklaufbahnen mit dem Maß h, der Lage der Laufbahnmitten unterhalb der Verbindungslinie der Lastfaufbahnverbindungslinien.
Fig. 4 zeigt einen Teilquerschnitt mit den Berührpunkten der Kugeln 4 auf den Tragplattenprofilbahnen und Wellenprofilbahnen, die Lage der Umlenkbahnen oberhalb der Ebene gebildet aus den Endpunkten der geraden Abschnitte der Traglaufbahnen und Rücklaufbahnen und den notwendigen Freigang der in die Wellenprofile eintauchenden Kugeln 4.

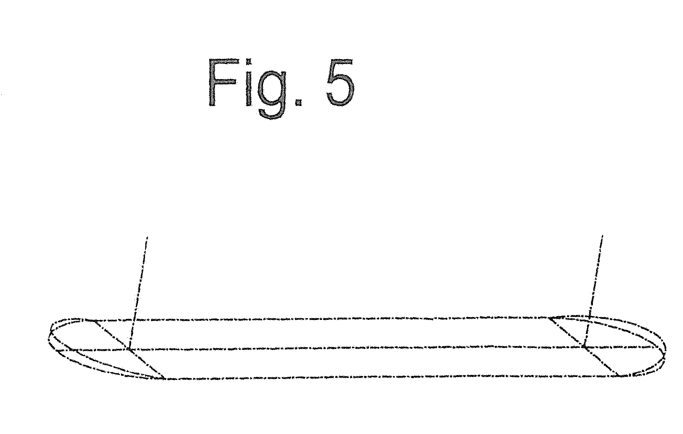

Fig. 5 zeigt eine räumliche Bahn gebildet aus dem Lastbereich, den Umlenkbereichen und dem Rücklaufbereich, bei der der Umlenkbereich um eine Achse gebildet aus einer Geraden durch die Endpunkte gedreht ist, sodass der Einlauf von der Rücklaufzone in die Lastzone aus einem oberhalb der Ebene gebildet aus den Endpunkten erfolgt.

### Bezugsziffern:

- 1: Außenhülse
- 2: Innenkäfig
- 3: Tragplatte
- 4: Kugel

- A1: Berührpunkt Tragplatte
- A2: Berührpunkt Welle
- B1: identisch A1 Berührpunkt Tragplatte
- B2: Berührpunkt Profilbahn

## Patentansprüche

1. Linearkugellager für die Bewegung auf einer kreisrunden, elliptischen, oder anderen geschlossenen Profilen mit teilweise kugelabschnittsförmigen Bereichen und auf darauf mit Kugelbahnen versehenen Wellen, mit mehreren jeweils zwei Laufbahnen aufweisenden Lastbereichen, die im Querschnitt entlang einem Kreisbogen angeordnet sind, die aus einer ein- oder mehrteiligen Außenhülse (1) bestehen, in die die Laufbahnen tragenden Platten (3) mit jeweils mindestens einem Kugelführungselement, das Umlenkbahnen und Rücklaufbahnen enthält, eingebracht sind, **dadurch gekennzeichnet, dass** der Radius der jeweiligen Rücklaufbahn zum Wellenmittelpunkt kleiner ist als der Radius der Traglaufbahn zum Wellenmittelpunkt und die Umlenkbahnen räumlich so geneigt sind, dass alle Mittelpunkte der Umlenkbahnen oberhalb einer Ebene gebildet aus einem Rechteck zwischen Traglaufbahn und Rücklaufbahn liegen.

2. Linearkugellager nach Anspruch 1, **dadurch gekennzeichnet, dass** die Umlenkbahnen um eine Linie gebildet aus dem Endpunkt der Geraden der Traglaufbahnen und der jeweiligen Rücklaufibahn nach außen in einem Winkel gedreht sind.

3. Linearkugellager nach Anspruch 1 oder 2, **dadurch gekennzeichnet, dass** Anstieg und Abstieg in der jeweiligen Umlenkbahn eine konstante Steigung aufweist.

4. Linearkugellager nach Anspruch 1 oder 2, **dadurch gekennzeichnet, dass** der Anstieg und Abstieg in der jeweiligen Umlenkbahn eine variable Steigung aufweist.
